# EUROPÄISCHE PATENTSCHRIFT

(11) **EP 0 707 943 B1**
(45) Veröffentlichungstag und Bekanntmachung des Hinweises auf die Patenterteilung: **05.08.1998**
(21) Anmeldenummer: 94116382.6
(22) Anmeldetag: 18.10.1994
(51) Int. Cl.: B29C 70/34, B29C 53/56, B29C 53/80

(54) **Verfahren und Vorrichtung zur kontinuierlichen Herstellung von glasfaserronden für Schleif- und Trennscheiben**
Method and apparatus for continuously producing glass fiber discs for grinding and cutting wheels
Procédé et dispositif pour la fabrication continue de disques en fibre de verre pour outils de meulage et de tronçonnage

(43) Veröffentlichungstag der Anmeldung: 24.04.1996
(73) Patentinhaber: LEUROP Leutheusser KG Schleifmittelwerk, D-95623 Wunsiedel (DE)
(72) Erfinder: Leutheusser, Bernhard, Dipl.-Kfm., D-95615 Marktredwitz (DE); Hecht, Thomas, Dipl.-Ing., D-95659 Arzberg (DE); Benkler, Helmut, Prof. Dr.-Ing., D-96479 Weitramsdorf (DE)
(74) Vertreter: Metzler, Jürgen, Dipl.-Ing.

(56) Entgegenhaltungen:
- EP-A- 0 591 822
- DE-A- 3 735 778
- DE-A- 3 819 199
- US-A- 4 289 564

## Beschreibung

Die vorliegende Erfindung bezieht sich auf ein Verfahren zur Herstellung von insbesondere als Armierung für Schleif- und Trennscheiben dienenden Glasfaserronden, bei dem ein beharzter Glasfaserfaden nach einem vorgegebenen Wickelmuster über mehrere gleichmäßig über den Umfang verteilte Wickelpunkte gewickelt und anschließend fixiert wird. Des weiteren betrifft die Erfindung eine Wickelvorrichtung zur Durchführung des Verfahrens.

Wahrend bei Glasfaserronden mit zueinander rechtwinklig verlaufenden Glasfasern, also "Stanzronden" aus gewebten Glasfasermatten, die im Betrieb auftretenden Radial- und Tangentialspannungen nur ungenügend aufgenommen werden können, weil diese Ausrichtung der Glasfasern nicht mit dem Verlauf dieser Spannungen übereinstimmt, zeigt DE 38 19 199 C2 zur Armierung von Schleif- oder Trennscheiben eingesetzte Wickelronden mit einem dem Spannungsverlauf gerecht werdenden Wickelmuster, das eine etwa 35 %ige Einsparung an Fadenlänge bewirkt. Bei der Herstellung dieser Glasfaserronden wird der beharzte Glasfaserfaden nach Klemmung an der Wickelschablone über mehrere über den Umfang verteilte Wickelpunkte beidseitig auf die Schablone gewickelt. Am letzten Wickelpunkt wird der Glasfaserfaden wieder geklemmt und abgeschnitten. Sodann wird der Wickelkörper durch Aufschneiden der zuvor fixierten Glasfaserfäden um den Rand der Schablone herum in zwei Glasfaserronden geteilt, die vorher zur Fadenkreuzungsfixierung plangepreßt wurden. Bei diesem bekannten Verfahren entsteht weit weniger Abfall - eine Verringerung von etwa 25 % - als beim Ausstanzen von aus rechtwinkligem Geflecht bestehenden Ronden. Allerdings läßt sich auch beim bekannten Verfahren Abfall nicht vollständig vermeiden, der insbesondere als Glasstaub beim Trennen des Wickelkörpers auftritt. Beim bekannten Verfahren handelt es sich zudem um einen diskontinuierlichen Vorgang. Sobald der eigentliche Wickelvorgang beendet ist, muß die Wickeleinrichtung stillgesetzt werden. Der abgeschnittene Faden muß erneut eingefädelt und verklemmt werden, um die nächste Wickelronde wickeln zu können, was zu hohen Stillstandszeiten der Wickelvorrichtung führt und damit einen verringerten Produktionsausstoß mit erhöhten Produktionskosten zur Folge hat. Bei dem bekannten Verfahren kann es auch bei verschiedenen Arbeitsschritten zu einem gegenseitigen Verheddern und Verhakeln der Ronden nach dem Trennvorgang kommen, so daß Störungen bei der Weiterverarbeitung entstehen, die den Arbeitsfluß beeinträchtigen.

Die Aufgabe der Erfindung besteht darin, das Verfahren der im Oberbegriff des Anspruches 1 angegebenen Art insoweit zu verbessern, daß ein kontinuierliches und abfalloses Herstellen von Glasfaserronden bei Minderung der Störanfälligkeit und Steigerung des Mengendurchsatzes ermöglicht wird. Der Wickelvorgang soll vereinfacht werden, so daß das gewünschte Wickelmuster präzise herstellbar ist. Ein ständiges Klemmen und Wiedereinfädeln des Fadens nach jedem einzelnen Wickelvorgang soll entfallen. Die Aufgabe der Erfindung besteht weiterhin darin, eine Vorrichtung zur Durchfuhrung des Verfahrens zu schaffen, mit der ein kontinuierliches Arbeiten möglich ist und die einen kompakten Aufbau aufweist.

Zur Lösung dieser Aufgabe sind bei der Erfindung die im kennzeichnenden Teil des Hauptverfahrensanspruches 1 angegebenen sowie im Hauptvorrichtungsanspruch 4 enthaltenen Merkmale vorgesehen. In den diesen Ansprüchen folgenden abhängigen Ansprüchen sind für die Aufgabenlösung vorteilhafte und förderliche Weiterbildungen der Erfindung beansprucht.

Bei der Erfindung erfolgt das Wickeln also kontinuierlich, aufeinanderfolgend und in der Wickelstation durch vom Wickelmuster vorgegebenes teilweises Umschlingen der Wickelpunkte bis zur fertigen Wickelronde. Sodann wird die fertige Wickelronde über eine Leerstation bis zu einer Preßstation im Takt transportiert, wobei die Ronden in den einzelnen Stationen durchgängig über den Glasfaserfaden miteinander verbunden bleiben. In der Preßstation wird die Form durch Verkleben der Fäden an ihren Kreuzungspunkten unter Druck- und Temperatureinwirkung mittels eines Preßstempels fixiert. Erst dann oder gegen Ende des Fixiervorgangs und jedenfalls vor dem Entnehmen der fertigen Glasfaserronde aus der Entnahmestation wird der Glasfaserfaden durchtrennt, wobei keinerlei Abfall entsteht. Nach einem weiteren Merkmal der Erfindung wird der Wickelvorgang einseitig unter Erzeugung einer Wickelronde durchgeführt, wobei der Glasfaserfaden kontinuierlich von einer Abzugsvorrichtung, z.B. einem Coil, abgezogen wird. Es ist also kein Trennen der Ronden durch peripheres Aufschneiden erforderlich, so daß das Entstehen von Glasstaub vermieden wird. Die Wickelzeit liegt bei etwa 8 Sekunden, d.h. in dieser Zeit wird gleichzeitig in Parallelbearbeitung auf den vorhandenen Stationen gewickelt, durch Pressen fixiert, die Fadentrennung durchgeführt und die fertige Glasfaserronde entnommen.

Zur Durchführung des Verfahrens ist eine Vorrichtung vorgesehen, die einen drehbar gelagerten Rundtakttisch mit mehreren, z.B. vier, sich gegenseitig berührenden, d.h. in Umfangsrichtung ohne Abstand zueinander angeordneten Stationen, nämlich einer Wickelstation, einer Leerstation, einer Preßstation und einer Entnahmestation, aufweist. Dabei ist jede Station als Formgeberinsel mit kreisförmig angeordneten Wickelpunkten ausgebildet, wobei die Wickelpunkte durch etwa zapfenförmig gestaltete, axial gesteuerte Fadenaufnehmer (sog. Wickelpins) gebildet sind. Über der Wickelstation ist ein rotierender Wickelkopf, vorzugsweise in der Ausbildung als Wickelspindel, angeordnet, der den zum Wickeln benötigten Faden von einer Fadenabzugseinrichtung, z.B. einem Coil mit Fadenspeicher, abzieht. Der Wickelkopf wird durch einen stufenlos regelbaren AC-Servomotor angetrieben. Über der Preßstation befindet sich ein in Axialrichtung verlagerbarer Preßstempel. Der Entnahmestation schließlich ist eine Entnahmeeinrichtung zum automatischen Entnehmen der fertigen Glasfaserronden zugeordnet, wobei diese Entnahmeeinrichtung vorzugsweise als Greifer ausgebildet ist. Die Wickelpins sind in Axialrichtung verschiebbar gelagert und zu diesem Zweck jeweils mit einem Pneumatikzylinder verbunden, mit denen die Pins einzeln ansteuerbar sind und in verschiedene axiale Positionen bewegt werden können, so daß sie in der höchsten Stellung den Faden fangen, in einer abgesenkten Position den Faden halten und beim vollständigen Zurückziehen den Faden und damit die Wickelronde freigeben. Dabei besteht eine Funktionsverkettung zwischen der Wickelkopf-Drehbewegung und der axialen Pinbewegung der Wickelpunkte. Um ein einwandfreies Einfangen und Halten des Glasfaserfadens zu ermöglichen, sind die Wickelpins in bezug auf die Mittelachse jeder Formgeberinsel geringfügig um einen Winkel gegenüber der Senkrechten nach außen geneigt. Im Bereich der Preßstation ist nach einem weiteren Merkmal der Erfindung eine Schneideinrichtung zum abfallosen Durchtrennen des Glasfaserfadens angeordnet.

Die Herstellung von Glasfaserronden in der angegebenen Weise bringt eine Reihe entscheidender Vorteile: Abfall wird weitgehend vermieden, Stanzabfall entsteht nicht, so daß eine kostspielige Entsorgung von Sondermüll entfällt. Durch die günstigere Gestaltung des Rondenmusters im Hinblick auf die Optimierung der Festigkeitsanforderungen ergibt sich eine wesentliche Materialersparnis. Als Folge des kontinuierlichen Wickelns wird die Störanfälligkeit gemindert und der Mengendurchsatz gesteigert. Da die Ronden bereits bei der Herstellung vereinzelt sind, ist ein gegenseitiges Verhaken der Ronden nicht mehr möglich, so daß sie ohne zusätzlichen Aufwand einer Folgevorrichtung zugeführt werden können. Weiterhin ist eine Kontrolle und Korrektur auf Fehler des Wickelmusters nahezu ohne Zeitverzögerung möglich. Beim kontinuierlichen Wickelverfahren ist nur am Beginn des Arbeitsprozesses ein Einfädeln und Einklemmen des Glasfaserfadens erforderlich, sodann wird der gesamte Coil während der Durchführung des Verfahrens abgezogen, ohne daß ein den Arbeitsfluß störendes Zwischenklemmen erforderlich ist.

Die Erfindung wird nun anhand eines Ausführungsbeispiels im Zusammenhang mit der Zeichnung näher erläutert. Es zeigen:

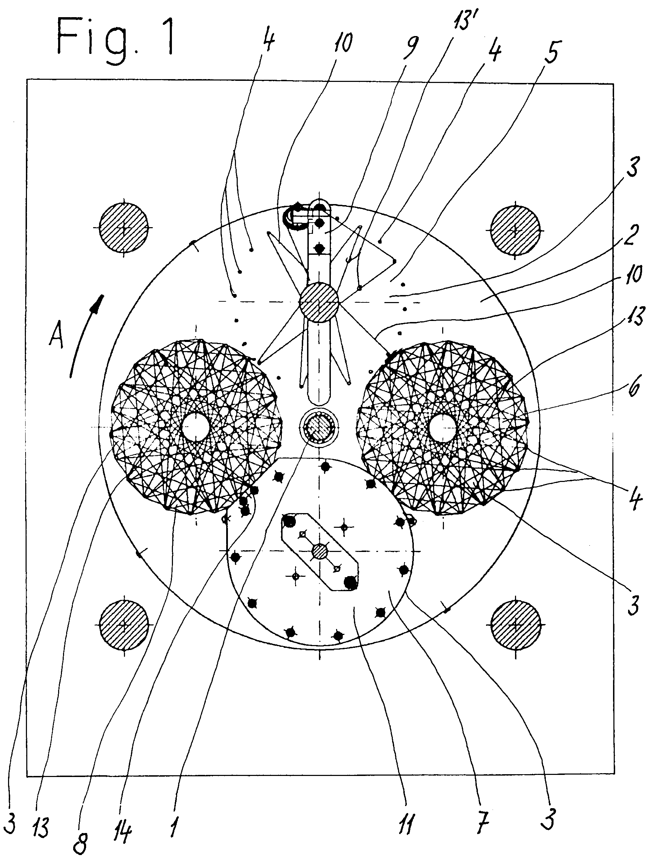

- Fig. 1: die Vorrichtung zum Herstellen der Ronden im kontinuierlichen Wickelverfahren, schematisch dargestellt, in der Draufsicht mit Wickelstation, Leerstation, Preßstation und Entnahmestation, und
- Fig. 2: in vergrößerter abgebrochener seitlicher Ansicht die Wickelstation mit Wickelkopf.

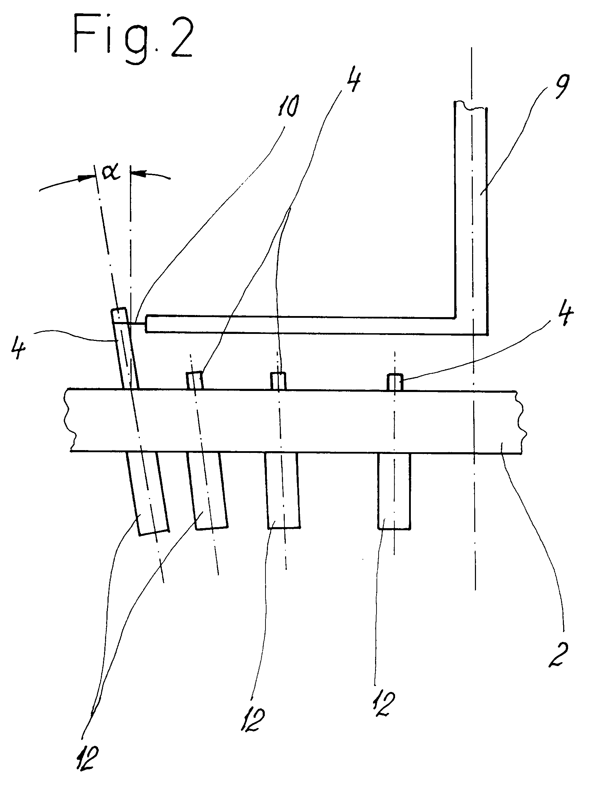

Die in der Zeichnung gezeigte Vorrichtung besteht im wesentlichen aus einem um die Achse 1 drehbar gelagerten Rundtakttisch 2. Der Rundtakttisch 2 trägt insgesamt vier untereinander identisch ausgebildete sog. Formgeberinseln 3, die jeweils von den kreisförmig angeordneten Wickelpunkten 4 gebildet werden. Diese Wickelpunkte 4 sind als zapfenförmige Elemente (sog. Pins) ausgebildet. Dies ist insbesondere in Fig. 2 deutlich zu erkennen, auf die weiter unten noch näher eingegangen wird. Die vier Formgeberinseln 3 sind in Umfangsrichtung verteilt so angeordnet, daß sie sich jeweils tangieren. Die Vorrichtung weist insgesamt vier Stationen auf, nämlich die eigentliche Wickelstation 5, eine Leerstation 6, die Preß- oder Fixierstation 7 und die Entnahmestation 8.

Die Wickelstation 5 ist mit dem rotierenden, stufenlos angetriebenen Wickelkopf 9 ausgerüstet, der den Glasfaserfaden 10 vom nicht gezeigten Coil od. dgl. mit zugeordnetem Fadenspeicher abzieht und mit dessen Hilfe in einer bestimmten Weise zur Erzielung des gewünschten Wickelmusters die einzelnen Wickelpunkte bzw. Pins 4 umschlungen werden. Der Antrieb des vorzugsweise als Wickelspindel ausgebildeten Wickelkopfes 9 erfolgt durch einen nicht weiter gezeigten stufenlos regelbaren AC-Servomotor. Die Leerstation 6 dient lediglich als Puffer zur Realisierung eines kontinuierlichen Wickelvorgangs. Im Bereich des Coils ist zur Fadenschonung noch ein nicht weiter dargestelltes Fadenumlenksystem vorgesehen. Die folgende Preßstation 7 weist einen axial beweglichen Preßstempel 11 auf, während die Entnahmestation 8 mit einer (nicht weiter gezeigten) z.B. als Greifer ausgebildeten Entnahmevorrichtung ausgestattet ist. Zwischen der Preßstation 7 und der Entnahmestation 8 ist noch eine Schneideinrichtung 14 angeordnet, die auch zwischen der Leerstation 6 und der Preßstation 7 vorgesehen sein könnte.

Wie bereits erwähnt, zeigt Fig. 2, daß die Wickelpunkte 4 als zapfenförmige Elemente bzw. als Pins ausgebildet sind. Diese Pins 4 stehen jeweils mit einem eigenen Pneumatikzylinder 12 in Verbindung und sind in Axialrichtung beweglich im Rundtakttisch 2 gelagert. Jeder Pneumatikzylinder 12 ist SPS-gesteuert. Dabei werden die Pins 4 in drei verschiedene axiale Stellungen nach entsprechender Ansteuerung der jeweiligen Pneumatikzylinder 12 verbracht bzw. verschoben, nämlich in die Fadenfangposition, bei der Pin 4 am weitesten Ober die Oberfläche des Rundtakttisches 2 vorsteht (s. Fig. 2), in die Arbeitsposition mit nur wenig über die Oberfläche des Rundtisches 2 vorstehendem Pin 4, in der der umschlungene Faden gehalten wird, und schließlich in die Entnahmeposition bei vollständig zurückgezogenem Pin 4, bei dem die fertige Ronde entnommen werden kann. Im übrigen zeigt Fig. 2, daß die Pins 4 gegenüber der senkrecht stehenden Achse des Wickelkopfes 9 geringfügig (Winkel α) nach außen geneigt sind. Anders gesagt, die Pins 4 folgen in ihrer Ausrichtung einem Kegelmantel, der axial nach unten konvergiert und dessen Spitze in der Achsverlängerung des Wickelkopfes 9 liegt. Diese geringfügige Neigung der Pins 4 führt zu einem besseren Fangen und Halten des Fadens 10 während des Wickelvorgangs. Die Achse des Wickelkopfes 9 fällt mit der Mittelachse der jeweils in der Wickelstation 5 befindlichen Formgeberinsel 3 zusammen. Der gemäß Pfeil A taktweise rotierende Rundtakttisch 2 transportiert nach jedem vollen Wickelvorgang die nach einem bestimmten und gewünschten Muster gewickelte Wickelronde 13 zur nächsten Station.

Aus der nachfolgenden Beschreibung der Wirkungsweise der Vorrichtung gehen weitere Vorrichtungsmerkmale und die einzelnen Verfahrensschritte hervor: Der beharzte Faden 10 wird auf einer Abzugsvorrichtung (z.B. Coil mit Fadenspannsystem und -speicher) bereitgestellt und über verschiedene, nicht weiter dargestellte Umlenkmechanismen dem Wickelkopf 9 zugeführt. Während des Wickelvorgangs in der Wickelstation 5 rotiert der Wickelkopf 9 mit dem Faden 10 über der in der Station 5 befindlichen Formgeberinsel 3. Die die Formgeberinsel 3 bildenden Fadenaufnehmer 4 können einzeln aus- und eingefahren werden. Im ausgefahrenen Zustand werden sie vom Faden 10 beim Passieren des Wickelkopfes 9 teilweise umschlungen, im eingefahrenen Zustand (Arbeitsposition) bleiben sie unbelegt. Durch das Aus- und Einfahren bestimmter Fadenaufnehmer 4 (Pins) zu bestimmten Zeitpunkten in Funktionszusammenhang mit dem rotierenden Wickelkopf 9 läßt sich ein bestimmtes Wickelmuster erzeugen. Die Fadenwicklung erfolgt also über den stufenlos regelbaren Wickelkopf 9, der beispielsweise als Wickelspindel ausgebildet ist, von oben her und einseitig. Zur Steuerung der Wickelpins 4 in Funktionszusammenhang mit der Wickelspindeldrehzahl (Drehwinkel !) wird ein entsprechendes SPS-Steuerprogramm für das herzustellende Wickelmuster herangezogen. Nachdem die Wickelronde 13 auf der Wickelstation 5 das gewünschte Muster erhalten hat, wird sie durch entsprechendes Drehen des Rundtakttisches 2 zur Leerstation 6 transportiert bzw. getaktet. Dabei hängt der Faden 10 immer noch am Wickelkopf 9. Bei der Wicklung der folgenden Ronde 13' in der Wickelstation 5 besteht also noch eine Verbindung zur vorhergehenden Ronde 13. Beim Transport der fertig gewickelten Ronde 13' von der Wickelstation 5 zur Leerstation 6 in einer 90^{o} Schaltung, wobei die Drehzahl des Wickelkopfes 9 etwa zurückgenommen wird, wird der Glasfaserfaden 10 durch den ortsfesten Wickelkopf 9 radial zur nun freien Wickelstation 5 herübergezogen, der Wickelvorgang startet wieder auf volle Drehzahl. Die Ronden 13, 13' hängen also bis zur Preßstation 7 im tangentialen Berührungspunkt der Formgeberinseln 3 über den Faden 10 zusammen. Bei der Wicklung der nächsten Ronde besteht also noch eine Verbindung zur vorhergehenden. Hierdurch wird ein kontinuierlicher Wickelvorgang ohne Wiedereinfädeln bzw. Verklemmen des Fadens 10 gewährleistet. Das sonst erforderliche ständige Trennen und Wiedereinfädeln des Fadens 10 ist somit nicht nötig. Beim nächsten Takt gelangt die Wickelronde 13 von der Leerstation 6 zur Preßstation 7. Der Preßstempel 11 fährt auf die Wickelronde 13 und preßt mit definiertem Druck unter definierter Temperatur innerhalb einer definierten Zeit. Hierdurch kommt es zu einem Verkleben und Fixieren der Fäden im Bereich ihrer Kreuzungspunkte. Während oder nach dem Preßvorgang und jedenfalls noch vor dem Entnehmen der Wickelronde 13 erfolgt das tangentiale Abschneiden des Fadens 10 mittels der Schneideinrichtung 14, wobei keinerlei Abfall entsteht. Der Preßstempel 11 fährt hoch; gleichzeitig werden von der Steuerung alle Pins 4 zurückgezogen. Beim nächsten Takt des Rundtisches 2 gelangt die Wickelronde 13 zur Entnahmestation 8, aus der die freiliegende Ronde 13 entnommen und gestapelt oder einer Folgevorrichtung übergeben wird. Nach dem Ausfahren der Pins 4 auf Arbeitshöhe gelangt die Formgeberinsel 3 im nächsten Takt wieder zur Wickelstation 5.

Bei jedem Takt wird also infolge Parallelbearbeitung an den Stationen eine fertige Ronde 13 entnommen und gleichzeitig eine neue Ronde 13 in der Wickelstation 5 gewickelt. Das Wickeln erfolgt lediglich auf einer Seite in etwa einer Ebene zwischen Wickelkopf 9 und der aus den Pins 4 bestehenden Formgeberinsel 3. Der gesamte Herstellvorgang erfolgt vollautomatisch.

## Patentansprüche

1. Verfahren zur Herstellung von insbesondere als Armierung von Schleif- und Trennscheiben dienenden Glasfaserronden, bei dem ein beharzter Glasfaserfaden (10) nach einem vorgegebenen Wickelmuster über mehrere gleichmäßig über den Umfang verteilte Wickelpunkte (4) gewickelt und anschließend fixiert wird, dadurch gekennzeichnet, daß das Wickeln kontinuierlich aufeinanderfolgend und durch teilweises Umschlingen der Wickelpunkte (4) bis zur fertigen Wickelronde (13) durchgeführt, die fertige Wickelronde (13) sodann über eine Leerstation (6) bis zu einer Preßstation (7) weitergetaktet, in der Preßstation (7) fixiert und schließlich zu einer Entnahmestation (8) getaktet wird, wobei die kontinuierlich und in zeitlicher Parallelbearbeitung taktweise erzeugten Wickelronden (13) über den Glasfaserfaden (10) jeweils im Berührungspunkt der Wickelronden (13) zusammenhängen und dieser Faden (10) erst während oder nach dem Fixieren bzw. vor dem Entnehmen der Wickelronden (13) abfallos durchtrennt wird.

2. Verfahren nach Anspruch 1, dadurch gekennzeichnet, daß der Wickelvorgang jeweils einseitig unter Erzeugung der Wickelmuster durchgeführt wird, wobei der Glasfaserfaden (10) kontinuierlich von einer Abzugsvorrichtung (z.B. Coil mit Fadenspannsystem) abgezogen wird.

3. Verfahren nach Anspruch 1 oder 2, dadurch gekennzeichnet, daß das Fixieren der überkreuzten Fäden des Wickelmusters in der Preßstation (7) durch Pressen mit einem definierten Druck und einer definierten Temperatur durchgeführt wird.

4. Vorrichtung zur Durchführung des Verfahrens nach einem der Ansprüche 1 bis 3, dadurch gekennzeichnet, daß ein drehbar gelagerter Rundtisch (2) zur Parallelbearbeitung mehrere Stationen, wie Wickelstation (5), Leerstation (6), Preßstation (7) und Entnahmestation (8) aufweist, und die kreisförmig angeordneten, jeweils eine Formgeberinsel (3) bildenden Wickelpunkte (4) als Fadenaufnehmer ausgebildet sind, wobei über der Wickelstation (5) ein rotierender Wickelkopf (9) und über der Preßstation (7) ein axial verlagerbarer Preßstempel (11) angeordnet ist, während der Entnahmestation (8) eine Entnahmeeinrichtung zugeordnet ist.

5. Vorrichtung nach Anspruch 4, dadurch gekennzeichnet, daß der Wickelkopf (9) als Wickelspindel ausgebildet und mit einem fadenschonenden Wickelumlenksystem und stufenlos regelbarem AC-Servomotor ausgerüstet ist.

6. Vorrichtung nach Anspruch 4 oder 5, dadurch gekennzeichnet, daß die kreisförmig angeordneten Formgeberinseln (3) auf dem Rundtisch (2) in Umfangsrichtung gleichmäßig, sich gegenseitig tangierend, vorgesehen sind.

7. Vorrichtung nach einem der Ansprüche 4 bis 6, dadurch gekennzeichnet, daß die Fadenaufnehmer (4) als axial verschiebbar gelagerte Zapfen (Pins) ausgebildet sind, deren Axialbewegung im Funktionszusammenhang mit der Drehbewegung des Wickelkopfes (9) steht.

8. Vorrichtung nach Anspruch 7, dadurch gekennzeichnet, daß den Zapfen bzw. Pins (4) jeweils eigene SPS-gesteuerte Pneumatikzylinder (12) zugeordnet sind, mit denen die Zapfen (4) über die SPS-Steuerung in Funktionszusammenhang mit dem Wickelkopf-Servomotor einzeln ansteuerbar und axial verschiebbar sind.

9. Vorrichtung nach einem der Ansprüche 4 bis 8, dadurch gekennzeichnet, daß im Bereich der Preßstation (7) eine Schneideinrichtung (14) zum Durchtrennen des Glasfaserfadens (10) je Ronde angeordnet ist.

10. Vorrichtung nach einem der Ansprüche 4 bis 9, dadurch gekennzeichnet, daß die Wickelpins (4) in bezug auf die Mittellängsachse jeder Formgeberinsel (3) geringfügig gegenüber der Senkrechten nach außen geneigt (Winkel α) sind, derart, daß die Wickelpins (4) auf einem axial nach unten konvergierenden Kegelmantel liegen.

## Claims

1. Method of producing glass fibre disks serving specifically as reinforcement of grinding and cutting wheels, wherein a resin-coated glass fibre thread (10) is wound in correspondence with a given winding pattern over several coiling points (4) equally distributed along the periphery, and is subsequently fixed, **characterized** in that the winding operation is continuously performed in succession and with partially wrapping around said coiling points (4) until the wound disk (13) is finished, that the finished wound disk (13) is then advanced in a fixed cycle via a no-load station (6) up to a press station (7) and is fixed in said press station (7), and is finally advanced in a fixed cycle up to a removal station (8), with said wound disks (13), which are produced continuously and in a fixed cycle in a simultaneous operation, being each coherent via said glass fibre thread (10) at the point of contact of said wound disks (13) and with this thread (10) being cut without waste only during or after fixing or prior to removal of said wound disks (13).

2. Method according to Claim 1, **characterized** in that the winding operation is carried out on one respective side with generation of said winding patterns, with said glass fibre thread (10) being continuously drawn off by a pull-off device (such as a coil with thread-tensioning system).

3. System according to Claim 1 or 2, **characterized** in that the fixing of the crossed-over threads of said winding pattern is performed in said press station (7) by pressing with a defined pressure and at a defined temperature.

4. Apparatus for carrying through the method according to any of the Claims 1 to 3, **characterized** in that a round table (2) for parallel operation, which is supported for rotation, comprises several stations such as a winding station (5), a no-load station (6), a press station (7) and a removal station (8), and that said winding points (4), which are disposed in a circular arrangement and constitute each a moulding deck (3), are configured as thread pick-up elements, with a rotating winding head being disposed above said winding station (5) and with an axially displaceable press ram (11) being disposed above said press station (7) whilst a removal device is associated with said removal station (8).

5. Apparatus according to Claim 4, **characterized** in that said winding head (9) is designed as winding spindle and is equipped with a thread-protecting coil deflector system and an infinitely variable AC servo motor.

6. Apparatus according to Claim 4 or 5, **characterized** in that said moulding decks (3) in circular arrangement are provided on said round table (2) in equal spacings along the peripheral direction for a mutually tangent relationship.

7. Apparatus according to any of the Claims 4 to 6, **characterized** in that said thread pick-up elements (4) are configured as pins supported for axial displacement and performing an axial movement in functional connection with the rotating movement of said winding head (9).

8. Apparatus according to Claim 7, **characterized** in that a separate SPS-controlled pneumatic cylinder (12) is associated with each of said pins (4), with these cylinders serving to control and axially displace said pins (4) individually via said SPS controller in functional connection with the servo motor of said winding head.

9. Apparatus according to any of the Claims 4 to 8, **characterized** in that a cutting means is disposed for each disk in the zone of said press station (7) for severing said glass fibre thread (10).

10. Apparatus according to any of the Claims 4 to 9, **characterized** in that said winding pins (4) are slightly inclined (angle α) to the outside relative to a normal with respect to the central longitudinal axis of each moulding deck (3), such that said winding pins (4) are located on a cone-shaped shell axially converging downwards.

## Revendications

1. Procédé pour la fabrication de disques en fibre de verre servant en particulier d'armature pour outils de meulage et de tronçonnage, dans le cas duquel un fil de fibre de verre (10) enduit de résine est enroulé suivant une figure d'enroulement prédéterminée autour de plusieurs points d'enroulement (4) répartis uniformément sur la circonférence et est ensuite fixé, caractérisé en ce que l'enroulement est réalisé successivement en continu et par entrelacement partiel des points d'enroulement (4) jusqu'à la fabrication du disque enroulé (13), le disque enroulé fabriqué (13) étant alors entraîné vers un poste de compression (7) via un poste de marche à vide (6), fixé dans la poste de compression (7) et enfin entraîné vers un poste d'enlèvement (8), les disques enroulés (13) produits en synchronisation de manière continue et simultanée étant respectivement attachés par le fil de fibre de verre (10) au point de contact des disques enroulés (13) et ce fil (10) étant coupé sans perte seulement lors de la fixation ou après celle-ci, c'est-à-dire avant l'enlèvement des disques enroulés (13).

2. Procédé suivant la revendication 1, caractérisé en ce que le processus d'enroulement a lieu chaque fois d'un côté par formation de la figure d'enroulement, le fil de fibre de verre (10) étant dévidé en continu d'un dispositif d'alimentation (par exemple une bobine avec système de tension de fil).

3. Procédé suivant la revendication 1 ou 2, caractérisé en ce que la fixation des fils croisés de la figure d'enroulement au poste de compression (7) est réalisée par compression à une pression définie et à une température définie.

4. Dispositif pour l'exécution du procédé suivant l'une quelconque des revendications 1 à 3, caractérisé en ce qu'une table circulaire (2) montée à rotation et destinée à l'usinage en parallèle comporte plusieurs postes, tels qu'un poste d'enroulement (5), un poste de marche à vide (6), un poste de compression (7) et un poste d'enlèvement (8) et en ce que les points d'enroulement (4) disposés de manière circulaire et formant chaque fois un îlot de façonnage (3) sont conçus comme des récepteurs de fil, une tête d'enroulement rotative étant disposée sur le poste d'enroulement (5) et une matrice de compression (11) étant disposée avec possibilité de déplacement axial sur le poste de compression, tandis qu'un dispositif d'enlèvement est adjoint au poste d'enlèvement (8).

5. Dispositif suivant la revendication 4, caractérisé en ce que la tête d'enroulement (9) se présente sous la forme d'une broche d'enroulement et est équipée d'un système d'inversion du sens d'enroulement préservant la fibre et d'un servomoteur à courant alternatif à réglage continu.

6. Dispositif suivant la revendication 4 ou 5, caractérisé en ce que les îlots de façonnage (3) disposés de manière circulaire sont prévus uniformément sur la table circulaire (2) dans le sens périphérique tangentiellement les uns aux autres.

7. Dispositif suivant l'une quelconque des revendications 4 à 6, caractérisé en ce que les récepteurs de fil (4) sont conçus comme des tourillons montés avec possibilité de déplacement axial, le déplacement axial étant en relation de fonctionnement avec le mouvement de rotation de la tête d'enroulement (9).

8. Dispositif suivant la revendication 7, caractérisé en ce qu'aux tourillons (4) sont adjoints des vérins pneumatiques respectifs (12) commandés par programme enregistré et grâce auxquels les tourillons (4) peuvent être commandés individuellement et être déplacés axialement au moyen de la commande par programme enregistré en relation de fonctionnement avec le servomoteur de la tête d'enroulement.

9. Dispositif suivant l'une quelconque des revendications 4 à 8, caractérisé en ce que dans la zone du poste de compression (7) est disposé un dispositif de coupe (14) destiné à couper le fil de fibre de verre (10) de chaque disque.

10. Dispositif suivant l'une quelconque des revendications 4 à 9, caractérisé en ce que les tourillons d'enroulement (4) sont légèrement inclinés vers l'extérieur (angle α) par rapport à la verticale au niveau de l'axe médian longitudinal de chaque îlot de façonnage (3) de telle sorte que les tourillons (4) reposent sur une surface conique convergeant axialement vers le bas.
